# EUROPÄISCHE PATENTANMELDUNG

(11) **EP 4 592 100 A1**
(43) Veröffentlichungstag der Anmeldung: **30.07.2025**
(21) Anmeldenummer: 24153519.4
(22) Anmeldetag: 23.01.2024
(51) Int. Cl.: B60D 5/00, B61G 5/10

(54) **KABELFÜHRUNGSSYSTEM UND GELENKFAHRZEUG**

(71) Anmelder: Browne, Denis, 22946 Trittau (DE)
(72) Erfinder: Browne, Denis, 22946 Trittau (DE)
(74) Vertreter: Seemann & Partner Patentanwälte mbB

(57) **Zusammenfassung**

Die Erfindung betrifft ein Kabelführungssystem (10) für ein Fahrzeuggelenk sowie ein Gelenkfahrzeug (12). Das Kabelführungssystem (10) für ein Fahrzeuggelenk eines Gelenkfahrzeugs (12) mit einem ersten Gelenkfahrzeugabschnitt (16) und einem zweiten Gelenkfahrzeugabschnitt (18), die über ein Fahrzeuggelenk gelenkig miteinander verbunden sind, wobei der erste Gelenkfahrzeugabschnitt (16) zum Fahrzeuggelenk hin einen ersten Endrahmen (22) und der zweite Gelenkfahrzeugabschnitt (18) zum Fahrzeuggelenk hin einen zweiten Endrahmen (24) aufweist, wobei zwischen dem ersten Endrahmen (22) und dem zweiten Endrahmen (24) ein Mittelrahmen (26) angeordnet ist, umfassend eine am ersten Endrahmen (22) anordbare oder angeordnete erste Endkabelklemme (32), eine am zweiten Endrahmen (24) anordbare oder angeordnete zweite Endkabelklemme (34) und eine am Mittelrahmen (26) anordbare oder angeordnete Mittelkabelklemme (36) zum Fixieren von Kabeln (11), wobei eine Halterung (31) der Mittelkabelklemme (36) am Mittelrahmen (26) eine zwangsgeführte Verschiebung der Mittelkabelklemme (36) in horizontaler Richtung quer zur Längsachse (14) des Gelenkfahrzeugs (12) erlaubt, ist dadurch weitergebildet, dass zwischen der Mittelkabelklemme (36) und der ersten Endkabelklemme (32) einerseits und zwischen der Mittelkabelklemme (36) und der zweiten Endkabelklemme (34) andererseits jeweils wenigstens eine erste Zwischenhalterung (40) bzw. zweite Zwischenhalterung (60) vorhanden ist, wobei jede der ersten und zweiten Zwischenhalterungen (40, 60) zum einen um eine durch die jeweilige erste bzw. zweite Zwischenhalterung (40, 60) verlaufende vertikale Zwischenhalterungsdrehachse (42, 62) drehbar ist und zum anderen jeweils über wenigstens einen Dreharm (44, 64) an einem Scharnier (43, 63) mit vertikaler Drehachse (45, 65) am ersten Endrahmen (22) einerseits bzw. am zweiten Endrahmen (24) andererseits angelenkt angeschlagen ist, wobei die erste Endkabelklemme (32), die zweite Endkabelklemme (34), die Mittelkabelklemme (36) und die ersten und zweiten Zwischenhalterungen (40, 60) eine Mehrzahl von Kabelöffnungen (38) aufweisen und ausgebildet sind, durch die Kabelöffnungen (38) hindurchgeführte Kabel (11) zu fixieren.

## Beschreibung

Die Erfindung betrifft ein Kabelführungssystem für ein Fahrzeuggelenk eines Gelenkfahrzeugs und ein Gelenkfahrzeug.

Gelenkfahrzeuge mit Fahrzeuggelenken zur Verbindung von miteinander angelenkt verbundenen Teilen sind in Form von Gelenkbussen oder schienengebundenen Fahrzeugen wie Straßenbahnen, Trams o.ä. bekannt. Solchen Gelenkfahrzeugen oder Gliederfahrzeugen ist gemeinsam, dass sie aus mehreren gelenkig verbundenen, betrieblich nicht trennbaren Teilen bzw. Abschnitten bestehen, zwischen denen ein Durchgang während der Fahrt möglich ist.

Manche Fahrzeuggelenke verbinden die Teile der Gelenkfahrzeuge so, dass sie sowohl kurvengängig sind als auch in begrenztem Umfang Verschwenkungen um eine Längsachse und eine horizontale Querachse des Gelenkfahrzeugs, also Dreh-, Nick- und Wankbewegungen, ermöglichen. Gelenkfahrzeuge sind üblicherweise schwere Fahrzeuge, sodass die Fahrzeuggelenke hohen Belastungen standhalten müssen.

Am Übergang eines Gelenkfahrzeugabschnitts zu einem Fahrzeuggelenk weist ein Gelenkfahrzeugabschnitt regelmäßig einen Endrahmen auf. An diesem ist beispielsweise ein Faltenbalg des Fahrzeuggelenks befestigt.

Ferner ist es für den Betrieb eines modernen Gelenkfahrzeugs notwendig, dass Kabel, beispielsweise elektrische Kabel oder Schläuche für Hydraulik oder Pneumatik, von einem Gelenkfahrzeugabschnitt in einen anderen Abschnitt geführt werden. Hierbei ist sicherzustellen, dass auch bei Bewegung im Fahrzeuggelenk des Gelenkfahrzeugs die Kabel nicht übermäßig beansprucht werden und dauerhaft eine Nutzung der Kabel möglich ist.

Dies betrifft u.a. elektrische Versorgungsleitungen wie für die Spannungsversorgung von Beleuchtung im Fahrzeuginnenraum oder am Fahrzeugäußeren oder elektrische Signalleitungen wie für die Anzeige von Fahrgastinformationen oder die Übertragung von Haltewünschen. Weiterhin dienen Kabel der Energieübertragung von einer Traktionsbatterie oder anderen Spannungsquelle in einem Fahrzeugabschnitt zu einem Antrieb in einem anderen Fahrzeugabschnitt. Entsprechend weisen die entlang des Fahrzeuggelenks geführten Kabel unterschiedliche Durchmesser, Steifigkeit und mechanische Belastbarkeit auf.

Bekannt sind Kabelführungen, welche mittels einer Führungsschiene, beispielsweise eines Federstahls, die von einem zum anderen Gelenkfahrzeugabschnitt verlaufenden Kabel stützen. Diese können beispielsweise in Niederflurfahrzeugen, bei denen nur wenig Platz unterhalb des Faltenbalgs vorgesehen ist, oberhalb des Durchgangs eines Fahrzeuggelenks angeordnet sein.

Bei Verwendung einer Führungsschiene, welche dem gesamten oder großen Teilen des Kabelverlaufs entlang des Fahrzeuggelenks folgt, besteht die Gefahr, dass bei unsachgemäßem Einbau Kabel oder der Federstahl beschädigt werden.

Hiervon ausgehend ist es eine Aufgabe der vorliegenden Erfindung, die Kabelführung in einem Fahrzeuggelenk zwischen zwei Gelenkfahrzeugabschnitten und damit den Betrieb eines Gelenkfahrzeugs stabil, sicher und zuverlässig zu gestalten.

Die Aufgabe wird gelöst durch ein Kabelführungssystem für ein Fahrzeuggelenk eines Gelenkfahrzeugs mit einem ersten Gelenkfahrzeugabschnitt und einem zweiten Gelenkfahrzeugabschnitt, die über ein Fahrzeuggelenk gelenkig miteinander verbunden sind, wobei der erste Gelenkfahrzeugabschnitt zum Fahrzeuggelenk hin einen ersten Endrahmen und der zweite Gelenkfahrzeugabschnitt zum Fahrzeuggelenk hin einen zweiten Endrahmen aufweist, wobei zwischen dem ersten Endrahmen und dem zweiten Endrahmen ein Mittelrahmen angeordnet ist, umfassend eine am ersten Endrahmen anordbare oder angeordnete erste Endkabelklemme, eine am zweiten Endrahmen anordbare oder angeordnete zweite Endkabelklemme und eine am Mittelrahmen anordbare oder angeordnete Mittelkabelklemme zum Fixieren von Kabeln, wobei eine Halterung der Mittelkabelklemme am Mittelrahmen eine zwangsgeführte Verschiebung der Mittelkabelklemme in horizontaler Richtung quer zur Längsachse des Gelenkfahrzeugs erlaubt, welches dadurch weitergebildet ist, dass zwischen der Mittelkabelklemme und der ersten Endkabelklemme einerseits und zwischen der Mittelkabelklemme und der zweiten Endkabelklemme andererseits jeweils wenigstens eine erste Zwischenhalterung bzw. zweite Zwischenhalterung vorhanden ist, wobei jede der ersten und zweiten Zwischenhalterungen zum einen um eine durch die jeweilige erste bzw. zweite Zwischenhalterung verlaufende vertikale Zwischenhalterungsdrehachse drehbar ist und zum anderen jeweils über wenigstens einen Dreharm an einem Scharnier mit vertikaler Drehachse am ersten Endrahmen einerseits bzw. am zweiten Endrahmen andererseits angelenkt angeschlagen ist, wobei die erste Endkabelklemme, die zweite Endkabelklemme, die Mittelkabelklemme und die ersten und zweiten Zwischenhalterungen eine Mehrzahl von Kabelöffnungen aufweisen und ausgebildet sind, durch die Kabelöffnungen hindurchgeführte Kabel zu fixieren.

Ein Grundgedanke der vorliegenden Offenbarung besteht darin, dass die Kabel am ersten und am zweiten Gelenkfahrzeugabschnitt jeweils in einer Endkabelklemme fixiert sind und dazwischen von einer am Mittelrahmen angeordneten Mittelkabelklemme sowie mindestens zwei Zwischenhalterungen gehalten werden. Die mittels des Kabelführungssystems geführten Kabel sind mittels der Kabelklemmen geführt. In den übrigen Abschnitten des Kabelverlaufs ist die Anordnung der Kabel durch die Kabel selbst, insbesondere durch die Steifigkeit der Kabel, definiert. Auf diese Weise ist keine durchgehende, sich entlang des Kabels oder der Kabel erstreckende Führungsschiene erforderlich. Durch ein erfindungsgemäßes Kabelführungssystem erhöht sich die Sicherheit und Zuverlässigkeit der Kabelführung und des Betriebs des Gelenkfahrzeugs. Darüber hinaus ist das beschriebene Kabelführungssystem flexibel in Gelenkfahrzeuge nachrüstbar, sofern das Gelenkfahrzeug zwei Endrahmen sowie einen Mittelrahmen aufweist.

Kabel im Sinne der vorliegenden Offenbarung dienen beispielsweise dazu, technische Funktionen der Gelenkfahrzeugabschnitte zu verknüpfen. Dabei wird der Begriff im Rahmen der vorliegenden Offenbarung derart verstanden, dass er alle Versorgungsleitungen wie beispielsweise elektrische Kabel, Glasfaserleitungen, Hydraulikleitungen, Druckluft- bzw. Pneumatikschläuche oder Luftschläuche für Klimatisierungsluft oder Heizungsleitungen umfasst.

Die Richtungsangaben vertikal und horizontal beziehen sich auf das Gelenkfahrzeug an sich, unabhängig von seiner aktuellen Fahrsituation, also unter der Annahme einer Positionierung des Gelenkfahrzeugs auf einer nicht geneigten Ebene. Sie sind außerdem als generelle Ausrichtungen zu verstehen, also als Generalisierung, dass beispielsweise die Endrahmen und der Mittelrahmen tatsächlich streng rechteckig wäre. Eine vertikale Drehachse ist somit als im Wesentlichen vertikal, eine horizontale Richtung als im Wesentlichen horizontal orientiert zu verstehen. Als Längsachse des Gelenkfahrzeugs wird die zentrale Längsachse des Gelenkfahrzeugs bezeichnet.

In einer Ausführungsform ist die Mittelkabelklemme am Mittelrahmen mittels eines Schlittens zwangsgeführt. Insbesondere weist hierzu der Mittelrahmen mindestens eine Schlittenführungsschiene und die Mittelkabelklemme eine Schlittenvorrichtung auf. Dies ermöglicht eine reibungsarme Verschiebung der Mittelkabelklemme in horizontaler Richtung quer zur Längsachse des Gelenkfahrzeugs. Insbesondere ist die Mittelkabelklemme in horizontaler Richtung quer zur Längsachse des Gelenkfahrzeugs verschiebbar. Ein Mittelrahmen wird beispielsweise auch als Mittelbügel bezeichnet.

Insbesondere ist die Mittelkabelklemme um eine horizontale Rotationsachse quer zur Längsachse des Gelenkfahrzeugs rotierbar oder nicht rotierbar ausgebildet. Für eine rotierbare Ausführungsform weist insbesondere die Halterung der Mittelkabelklemme, insbesondere eine Schlittenführungsschiene, einen runden Querschnitt auf. Dies ermöglicht eine Pendelbewegung der Mittelkabelklemme und damit beispielsweise einen Ausgleich einer Nickbewegung des Fahrzeuggelenks.

Eine schonende Handhabung der Kabel durch die Kabelführung wird in einer Ausführungsform dadurch ermöglicht, dass Halterungen der ersten und zweiten Endkabelklemmen an den Endrahmen jeweils eine Drehung der ersten bzw. zweiten Endkabelklemme um jeweils eine vertikale Endkabelklemmendrehachse erlauben. Beispielsweise sind mittels Halterungen die erste und zweite Endkabelklemme am ersten bzw. zweiten Endrahmen befestigt. Eine Halterung für eine Endkabelklemme ist insbesondere eine Aufhängung mit mindestens einem Lager zum drehbaren Lagern der Endkabelklemme.

Die Flexibilität der Kabelführung durch das Kabelführungssystem wird weiter erhöht, wenn jede der ersten und zweiten Zwischenhalterungen eine Querstange und mindestens eine an der Querstange befestigte Zwischenkabelklemme aufweist, wobei die Querstange mit der Zwischenkabelklemme um die jeweilige Zwischenhalterungsdrehachse rotierbar ist, wobei insbesondere die mindestens eine Zwischenkabelklemme entlang der Querstange horizontal verschiebbar ist und/oder um eine Längsachse der Querstange rotierbar ist.

Die mittels des Kabelführungssystems geführten Kabel sind durch die erste und die zweite Zwischenkabelklemme an zwei weiteren Positionen aufgehängt und fixiert. Hierdurch wird ein im Wesentlichen horizontal verlaufender Kabelverlauf sichergestellt.

Eine solche Ausführungsform eines Kabelführungssystems weist für die Zwischenkabelklemmen bis zu drei Freiheitsgrade auf. Zunächst ist jede Zwischenkabelklemme um die jeweilige Zwischenhalterungsdrehachse drehbar. Weiterhin ist in einer Ausführungsform die mindestens eine Zwischenkabelklemme entlang der Querstange horizontal verschiebbar. Falls auf einer Seite der Zwischenkabelklemme aufgrund einer Biegung des Fahrzeuggelenks zusätzliche Kabellänge vorhanden ist, ist dieses durch die vom Kabel bewirkte Bewegung, insbesondere Verschiebung, der Zwischenkabelklemme auszugleichen. Schließlich ist in einer Ausführungsform die Zwischenkabelklemme als Rotationsfreiheitsgrad um die Längsachse der Querstange rotierbar ausgebildet. Insbesondere ist mindestens eine Querstange als runde Querstange ausgebildet. Dies ermöglicht eine Pendelbewegung der Zwischenkabelklemme und damit beispielsweise einen Ausgleich einer Nickbewegung des Fahrzeuggelenks.

In einer anderen Ausführungsform ist vorgesehen, dass jede der ersten und zweiten Zwischenhalterungen mindestens eine Zwischenkabelklemme und mindestens eine Befestigungskette zur Befestigung der Zwischenkabelklemme an einem Dreharm aufweist. Insbesondere sind die Zwischenkabelklemmen mittels der Befestigungsketten, insbesondere unmittelbar oder mittelbar am Dreharm, aufgehängt. Bevorzugterweise sind die mindestens einen Zwischenkabelklemmen der ersten und zweiten Zwischenhalterung um die jeweilige Zwischenhalterungsdrehachse rotierbar.

Weitere Flexibilität in der Kabelführung wird dadurch erreicht, dass mindestens eine Zwischenkabelklemme mehrere Einzelkabelklemmen umfasst, wobei insbesondere jede Einzelkabelklemme entlang der Querstange horizontal verschiebbar ist und/oder um eine Längsachse der Querstange rotierbar ist.

Durch Einzelkabelklemmen, welche jeweils einzeln horizontal verschiebbar sind und/oder ausgebildet sind, an der Querstange zu pendeln, sind die Einzelkabelklemmen bei Bewegung des Fahrzeuggelenks einzeln anordbar. Dadurch ist es jeder Einzelkabelklemme ermöglicht, sich bestmöglich an die Form der jeweilig fixierten Kabel anzupassen und eine minimale Belastung der Kabel sicherzustellen.

Eine günstige Geometrie des Kabelführungssystems ist gegeben, wenn die erste Endkabelklemme und die zweite Endkabelklemme gegenüber der Längsachse des Gelenkfahrzeugs, insbesondere in zueinander gleicher Richtung, horizontal beabstandet anordbar oder angeordnet sind, wobei insbesondere die erste Endkabelklemme und die zweite Endkabelklemme jeweils einen gleichen oder unterschiedlichen horizontalen Abstand zur Längsachse des Gelenkfahrzeugs aufweisen. Gleiche Beabstandungen kommen vor allem bei einer Aneinanderreihung gleichartiger Fahrzeugabschnitte vor, beispielsweise Mittelwagen von mehrteiligen Straßenbahnen, während beim Übergang beispielsweise vom einem Triebwagen zu einem Mittelwagen die Geometrie konstruktionsbedingt unterschiedlich sein kann.

Beispielsweise sind die erste Endkabelklemme und die zweite Endkabelklemme beide auf der rechten Seite des Gelenkfahrzeugs in Fahrzeugrichtung oder beide auf der linken Seite des Gelenkfahrzeugs in Fahrzeugrichtung angeordnet. In einer Ausführungsform ist die Mittelkabelklemme jeweils auf der anderen Seite der Längsachse des Gelenkfahrzeugs angeordnet. Auf diese Weise ist in einer Ausführungsform für den Kabelverlauf des Kabelführungssystems eine C-Form vorgesehen.

Insbesondere weisen die erste Endkabelklemme und die zweite Endkabelklemme jeweils einen gleichen oder einen unterschiedlichen horizontalen Abstand zur Längsachse des Gelenkfahrzeugs auf. Bei einem gleichen horizontalen Abstand ist eine C-Form eines Kabelverlaufs beim ungeknickten Fahrzeuggelenk mit gleichen Schenkeln ausgebildet. Für den Fall unterschiedlicher horizontaler Abstände der Endkabelklemmen zur Längsachse des Gelenkfahrzeugs sind unterschiedliche Kabellängen auf den beiden Seiten der Mittelkabelklemme bevorzugterweise vorzusehen.

Das Kabelführungssystem ist einfach zu konstruieren, wenn das Kabelführungssystem spiegelsymmetrisch zu einer vom Mittelrahmen aufgespannten Ebene aufgebaut ist. Insbesondere ist bei einem spiegelsymmetrischen Kabelführungssystem die Mittelkabelklemme ausgebildet, die durch das Kabelführungssystem geführten Kabel an ihrer Mitte zu fixieren.

In einer anderen Ausführungsform ist das Kabelführungssystem nicht spiegelsymmetrisch zu einer vom Mittelrahmen aufgespannten Ebene. In einer solchen Ausführungsform sind insbesondere unterschiedliche Kabellängen auf den beiden Seiten der Mittelkabelklemme vorgesehen.

In einer Ausführungsform ist vorgesehen, dass das Kabelführungssystem mindestens drei, insbesondere vier, Dreharme aufweist, wobei zwei erste Dreharme am ersten Endrahmen und ein zweiter, insbesondere zwei zweite, Dreharme am zweiten Endrahmen angeordnet oder anordbar sind und/oder wobei zwei erste Dreharme um eine erste Dreharmdrehachse und ein zweiter Dreharm, insbesondere zwei zweite Dreharme, um eine zweite Dreharmdrehachse rotierbar sind. Mittels mehrerer rotierbarer Dreharme, die jeweils mit einer Zwischenhalterung verbunden sind, werden weitere Aufhängepunkte für die geführten Kabel zur Verfügung gestellt. Dies erhöht die Stabilität des Kabelführungssystems. Durch die Drehbarkeit der Dreharme und der Zwischenhalterungen sind die Stützpunkte der Kabel flexibel anordbar.

Eine Ausführungsform mit vier Dreharmen, wobei insbesondere zwei erste Dreharme am ersten Endrahmen und zwei zweite Dreharme am zweiten Endrahmen angeordnet und anordbar sind, findet beispielsweise in einem zum Mittelrahmen symmetrischen Kabelführungssystem Anwendung. Bevorzugterweise weisen zwei Dreharme, insbesondere zwei Paare von Dreharmen, jeweils eine Dreharmdrehachse auf. Dies vereinfacht die Konstruktion des Kabelführungssystems. Insbesondere weist jeder der mindestens drei, insbesondere vier, Dreharme eine erste oder eine zweite Zwischenhalterung auf, wobei die jeweilige Zwischenhalterung eine Querstange und eine Zwischenkabelklemme aufweist, wobei insbesondere jeweils eine Zwischenkabelklemme mehrere Endkabelklemmen umfasst. Also sind die Ausgestaltungen der Zwischenhalterungen unabhängig von der Anzahl der Dreharme.

Wenn mindestens ein Dreharm eine andere Länge als ein anderer Dreharm aufweist, ist eine stabile Kabelführung ermöglicht, indem im Raum verteilte Aufhängepunkte für die geführten Kabel bereitgestellt sind. Insbesondere weisen zwei am ersten Endrahmen angelenkt angeschlagene Dreharme und/oder zwei am zweiten Endrahmen angelenkt angeschlagene Dreharme eine unterschiedliche Länge auf. Insbesondere weisen ein am ersten Endrahmen angelenkt angeschlagener Dreharm und ein am zweiten Endrahmen angelenkt angeschlagener Dreharm eine gleiche Länge auf.

Ebenfalls zusätzliche Aufhängungspunkte durch zusätzliche Zwischenkabelklemmen und damit eine stabilere Kabelführung durch das Kabelführungssystem wird ermöglicht, wenn jede der ersten und zweiten Zwischenhalterungen zwei Querstangen mit jeweils mindestens einer an der jeweiligen Querstange befestigten Zwischenkabelklemme aufweist, wobei die zwei Querstangen jeweils an einem Halteholm um eine vertikale Querstangendrehachse rotierbar befestigt sind und der Halteholm um die Zwischenhalterungsdrehachse rotierbar am Dreharm befestigt ist. In einer solchen Ausführungsform ist an Stelle einer einzelnen Zwischenkabelklemme, welche um eine Zwischenhalterungsdrehachse drehbar ist, am Dreharm ein Halteholm befestigt, welcher mit zwei Querstangen verbunden ist. Die Querstangen sind jeweils um vertikale Querstangendrehachsen rotierbar und sind jeweils mit einer Zwischenkabelklemme verbunden. Auf diese Weise sind an einem rotierbaren Dreharm zwei Zwischenkabelklemmen angeordnet. Dies ermöglicht eine einfache Konstruktion bei gleichzeitig vielen Aufhängepunkten.

Bevorzugterweise sind die Querstangen und Zwischenkabelklemmen in einem Kabelführungssystem mit Halteholm wie oben beschrieben ausgebildet. Beispielsweise ist an jeder Querstange eine Zwischenkabelklemme befestigt, wobei die Zwischenkabelklemme entlang der jeweiligen Querstange horizontal verschiebbar ist und/oder um eine Längsachse der Querstange rotierbar ist. Insbesondere umfasst mindestens eine Zwischenkabelklemme mehrere Einzelkabelklemmen, wobei jede Einzelkabelklemme entlang der jeweiligen Querstange horizontal verschiebbar ist und/oder um eine Längsachse der jeweiligen Querstange rotierbar ist.

In einer Ausführungsform zeichnet sich das Kabelführungssystem dadurch aus, dass das Kabelführungssystem eingerichtet und ausgebildet ist, Kabel in einem C-förmigen Kabelverlauf zu führen. Dies hat den Vorteil, dass, anders als bei einem S-förmigen Kabelverlauf, mehr Platz für die Drehung der Dreharme zur Verfügung steht. Das Kabelführungssystem wird somit flexibler, da bei einem C-förmigen Kabelverlauf die Mittelkabelklemme beweglich verschiebbar ist, so dass die geführten Kabel entlastet werden können. Bei einem S-förmigen Kabelverlauf ist hingegen die Mittelkabelklemme in der Mitte fixiert, so dass für die Kabel weniger Spiel verbleibt.

Ein stabiles Kabelführungssystem wird bereitgestellt, wenn mindestens eine Endkabelklemme in einer Neutralposition parallel zur Längsachse des Gelenkfahrzeugs angeordnet ist. Eine Neutralposition einer Endkabelklemme, auch als Neutralstellung bezeichnet, ist die Position, in der die Endkabelklemme angeordnet ist, wenn die Fahrzeugabschnitte gegeneinander gerade ausgerichtet sind, also das Fahrzeuggelenk wie zur Fahrt auf gerader Strecke nicht geknickt ist. Insbesondere ist eine Neutralposition eine bevorzugte oder vorbestimmte Position in der Halterung der ersten und/oder zweiten Endkabelklemme. Bevorzugterweise weist die Halterung der ersten und/oder zweiten Endkabelklemme eine Rückstellvorrichtung auf, insbesondere eine Rückstellfeder, mittels derer eine aus einer Neutralposition gedrehte Endkabelklemme in die Neutralposition rückführbar ist. Insbesondere weist die Rückstellvorrichtung nur eine geringe Rückstellfederkonstante auf, um die Kabel mit einer geringen Rückstellkraft zurückzuführen und dabei nicht zu beschädigen. Sofern eine Endkabelklemme nur in einem vorbestimmten Winkelbereich rotierbar ist, ist die Neutralposition insbesondere die mittlere Winkelstellung des vorbestimmten Winkelbereichs.

Das Kabelführungssystem enthält zusätzliche Einstellungsmöglichkeiten der Kabelführung, wenn mindestens eine Endkabelklemme und/oder mindestens eine Zwischenhalterung und/oder mindestens eine Zwischenkabelklemme in einem vorbestimmten Winkelbereich rotierbar sind, wobei insbesondere der Winkelbereich 90° oder kleiner, insbesondere 60° oder kleiner, insbesondere 50° oder kleiner, insbesondere 30° oder kleiner, insbesondere 20° oder kleiner, ist. In Ausführungsformen ist der vorbestimmte Winkelbereich 75° oder kleiner, 40° oder kleiner, 15° oder kleiner oder 10° oder kleiner. Durch einen eingeschränkten Winkelbereich einer Rotation wird einerseits in bestimmten Fällen das geführte Kabel stärker belastet, weil die Kabelklemmen sich nicht entsprechend dem vom Kabel vorgegebenen Kabelverlauf drehen können, allerdings wird der konstruktive Aufwand für ein Kabelführungssystem verringert. Zudem ist durch vorbestimmte Winkelbereiche für die Rotation von Kabelklemmen ein gewisser Korridor für den Kabelverlauf vorgegeben, was die Fehleranfälligkeit des Kabelführungssystems minimiert und die Verwendungssicherheit erhöht.

In einer Ausführungsform ist mindestens eine Querstange in einem vorbestimmten Winkelbereich rotierbar. Beispielhaft entsprechen mögliche vorbestimmte Winkelbereiche den Winkelbereichen für die Kabelklemmen. Insbesondere sind verschiedene Kabelklemmen und/oder Halterungen in unterschiedlichen vorbestimmten Winkelbereichen rotierbar. Beispielsweise sind die Endkabelklemmen in einem Winkelbereich von 50° oder kleiner rotierbar, während die Zwischenhalterungen um die Dreharme in einem Winkelbereich von 90° oder kleiner drehbar sind. In einer weiteren Ausführungsform ist mindestens ein am ersten Endrahmen angelenkt angeschlagener Dreharm und/oder mindestens ein am zweiten Endrahmen angelenkt angeschlagener Dreharm in einem vorbestimmten Winkelbereich rotierbar. Konkrete Winkelbereiche für die erlaubten Drehungen der genannten Teile ergeben sich aus dem Bereich an Kurvenradien und damit Fahrzeuggelenkknickwinkel eines konkreten Gelenkfahrzeugs, sowie die in diesem Bereich auftretenden konkreten Kabelverläufe, für die das Kabelführungssystem ausgelegt wird. Über diese designtechnischen Bereiche hinaus ist vorzugsweise ein Puffer von ±5°, ±10° oder ±20° beispielsweise vorzusehen.

Eine geringere Belastung von durch das Kabelführungssystem geführten Kabeln wird durch einen weiteren Freiheitsgrad der Bewegung erreicht, der gegeben ist, wenn mindestens ein Dreharm als Teleskopdreharm mit veränderlicher Länge ausgebildet ist, wobei insbesondere der Teleskopdreharm mindestens zwei rohrförmige Teleskopsegmente unterschiedlichen Außendurchmessers aufweist.

Insbesondere weist ein Teleskopdreharm mindestens eine Feder zum Rückstellen in eine Ruhelänge auf. In einer anderen Ausführungsform weist ein Teleskopdreharm ein Langloch mit Läufer auf, wobei der Läufer ausgebildet ist, sich entlang des Langlochs zu verschieben, wobei die Zwischenhalterungen mit dem Läufer verbunden sind.

Bevorzugterweise weisen die erste und zweite Endkabelklemme und die Mittelkabelklemme Kabelöffnungen unterschiedlichen Durchmessers aufweisen, wobei insbesondere in horizontaler Richtung mittig angeordnete Kabelöffnungen einen größeren Durchmesser aufweisen als Kabelöffnungen jenseits der horizontalen Mitte der jeweiligen Kabelklemme. Kabelöffnungen unterschiedlichen Durchmessers ermöglichen das Fixieren unterschiedlicher Kabel, beispielsweise sowohl von Spannungsversorgungskabeln als auch von Signalkabeln. In einer Ausführungsform sind die Kabelöffnungen eines größeren Durchmessers jeweils in der Mitte der jeweiligen Kabelklammer angeordnet, so dass die stabilsten und schwersten Kabel mit dem größten Durchmesser durch die jeweilige vertikale Drehachse der jeweiligen Kabelklemme verlaufen. Da Kabel größeren Durchmessers in der Regel aufgrund größerer Steifigkeit auf das Kabelführungssystem die größten Kräfte bewirken, verringert das Anordnen auf der Drehachse Torsionsmomente auf die Drehachsen der Kabelklemmen sowie der Drehachsen der Querstangen. Dies erhöht die Sicherheit und Stabilität des Kabelführungssystems.

Weiterhin ist vorgesehen, dass das Kabelführungssystem einen Mittelrahmen aufweist und die Mittelkabelklemme am Mittelrahmen anordbar oder angeordnet ist. Dies stellt eine sichere Führung der Mittelkabelklemme am Mittelrahmen sicher.

Ferner wird die Aufgabe durch ein Gelenkfahrzeug mit einem oben beschriebenen Kabelführungssystem gelöst. Ein solches Gelenkfahrzeug implementiert mit dem erfindungsgemäßen Kabelführungssystem die gleichen Vorteile, Eigenschaften und Merkmale wie das Kabelführungssystem.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische, perspektivische Ansicht eines Übergangs,
- Fig. 2: eine schematische Draufsicht eines ersten Ausführungsbeispiels eines Kabelführungssystems,
- Fig. 3: eine schematische Seitenansicht einer an einem Mittelrahmen zwangsgeführten Mittelkabelklemme,
- Fig. 4: eine schematische, abschnittsweise Seitenansicht des ersten Ausführungsbeispiels eines Kabelführungssystems,
- Fig. 5: eine schematische, abschnittsweise Draufsicht eines zweiten Ausführungsbeispiels eines Kabelführungssystems,
- Fig. 6: eine schematische, abschnittsweise Seitenansicht des zweiten Ausführungsbeispiels eines Kabelführungssystems,
- Fig. 7: eine schematische, abschnittsweise Draufsicht eines dritten Ausführungsbeispiels eines Kabelführungssystems, und
- Fig. 8: eine schematische, abschnittsweise Seitenansicht des dritten Ausführungsbeispiels eines Kabelführungssystems.

In den Zeichnungen sind jeweils gleiche oder gleichartige Elemente und/oder Teile mit denselben Bezugsziffern versehen, so dass von einer erneuten Vorstellung jeweils abgesehen wird.

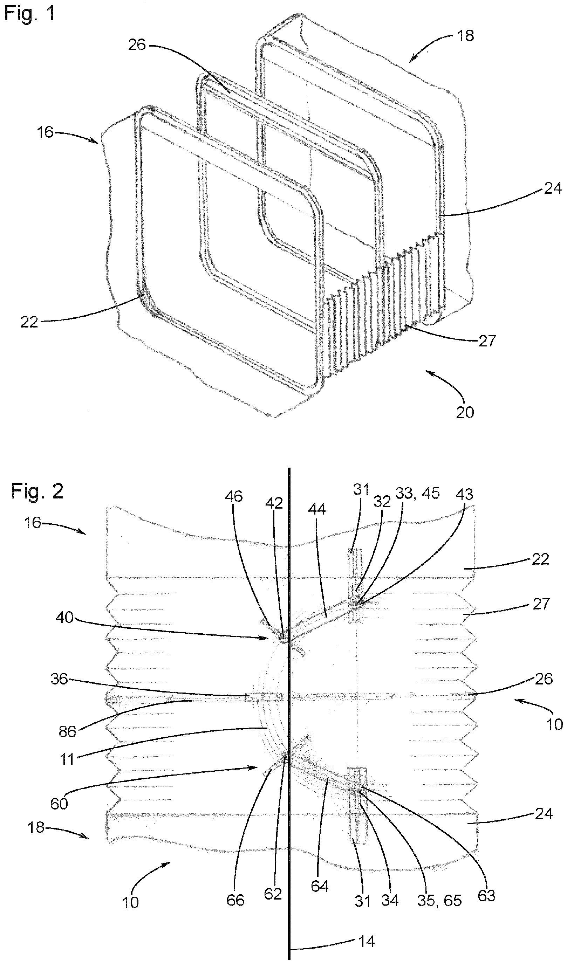

In Fig. 1 ist eine schematische, perspektivische Ansicht eines Übergangs 20 eines Gelenkfahrzeugs 12 dargestellt. Das Gelenkfahrzeug 12 ist beispielsweise ein Gelenkbus oder eine Straßenbahn. Ein erster Gelenkfahrzeugabschnitt 16 weist einen ersten Endrahmen 22 sowie ein zweiter Gelenkfahrzeugabschnitt 18 weist einen zweiten Endrahmen 24 auf. Zwischen den Endrahmen 22, 24 ist ein Übergang 20 mit einem Fahrzeuggelenk und einem Faltenbalg 27 angeordnet. Weiterhin ist zwischen dem ersten Endrahmen 22 und dem zweiten Endrahmen 24 ein Mittelrahmen 26 angeordnet.

Nicht dargestellt in Fig. 1 ist ein Kabelführungssystem 10. Ein solches wird üblicherweise an den Endrahmen 22, 24 sowie dem Mittelrahmen 26 befestigt. In manchen Ausführungsformen sind wenigstens ein Endrahmen 22, 24 und/oder ein Mittelrahmen 26 Teil eines Kabelführungssystems 10.

In Fig. 2 ist eine schematische Draufsicht eines ersten Ausführungsbeispiels eines Kabelführungssystems 10 gezeigt. Am oberen Bildrand ist der erste Gelenkfahrzeugabschnitt 16 mit einem ersten Endrahmen 22 und am unteren Bildrand ist der zweite Gelenkfahrzeugabschnitt 18 mit einem zweiten Endrahmen 24 abgebildet. Dazwischen ist, unter anderem, ein Mittelrahmen 26 und ein Faltenbalg 27 angeordnet. Die Gelenkfahrzeugabschnitte 16, 18 sind in einer neutralen Stellung gerade hintereinander angeordnet, entsprechend einer Geradeausfahrt.

Eine zentrale Längsachse 14 des Gelenkfahrzeugs 12 verläuft in der Abbildung mittig von oben nach unten. Der Mittelrahmen 26 verläuft in der abgebildeten neutralen Geradeausstellung im Wesentlichen senkrecht zur Längsachse 14. Kabel 11 verlaufen vom ersten Endrahmen 22 des ersten Gelenkfahrzeugabschnitts 16 zum zweiten Endrahmen 24 des zweiten Gelenkfahrzeugabschnitts 18.

Am ersten Endrahmen 22 ist mittels einer Halterung 31 eine erste Endkabelklemme 32 angeordnet, insbesondere befestigt. Die erste Endkabelklemme 32 ist in diesem Ausführungsbeispiel in einer Neutralposition parallel zur Längsachse 14 des Gelenkfahrzeugs 12, d.h. quer zur Ausdehnung des ersten Endrahmens 22 angeordnet. Die erste Endkabelklemme 32 ist drehbar um eine erste Endkabelklemmendrehachse 33, welche hier mit einer ersten Dreharmachse 45 eines ebenfalls an der Halterung 31 angeordneten, insbesondere befestigten, ersten Dreharms 44 zusammenfällt. Der erste Dreharm 44 ist mittels eines Scharniers 43 an der Halterung 31 befestigt und weist an seinem der Halterung 31 abgewandten Ende eine erste Zwischenhalterung 40 auf, welche um eine erste Zwischenhalterungsdrehachse 42 drehbar am ersten Dreharm 44 befestigt ist.

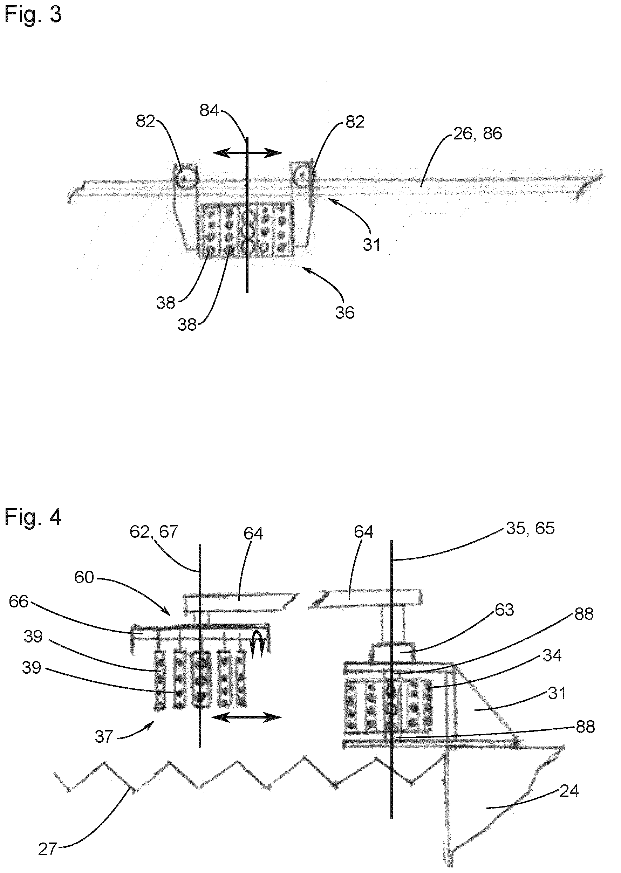

Die erste Zwischenhalterung 40 weist in diesem Ausführungsbeispiel eine Querstange 46 mit einer Zwischenkabelklemme 37 auf und ist in weiterem Detail in Fig. 4 beschrieben.

Nach der ersten Endkabelklemme 32 und der Zwischenkabelklemme 37 der ersten Zwischenhalterung 40 sind in einer Mittelkabelklemme 36 die Kabel 11 an einem dritten Punkt des Kabelführungssystems 10 fixiert. Die Mittelkabelklemme 36 ist entlang eines Mittelrahmens 26 zwangsgeführt und ist beispielsweise wie in Fig. 3 beschrieben ausgebildet.

Das Kabelführungssystem 10 ist spiegelsymmetrisch zu einer vom Mittelrahmen 26 aufgespannten Ebene aufgebaut. Folglich ähnelt die untere Hälfte von Fig. 2 der bereits beschriebenen oberen Hälfte.

Am zweiten Endrahmen 24 des zweiten Gelenkfahrzeugabschnitts 18 ist mittels einer Halterung 31 eine zweite Endkabelklemme 34 angeordnet, insbesondere befestigt. Auch die zweite Endkabelklemme 34 ist in einer Neutralposition parallel zur Längsachse 14 des Gelenkfahrzeugs 12 angeordnet. Die zweite Endkabelklemme 34 ist um eine zweite Endkabelklemmendrehachse 35 drehbar. Die Endkabelklemmendrehachse 35 fällt zusammen mit der zweiten Dreharmdrehachse 65 des zweiten Dreharms 64, welcher mittels eines Scharniers 63 an der Halterung 31 befestigt ist. In einem anderen, nicht dargestellten Ausführungsbeispiel ist vorgesehen, dass die Dreharmachsen und Endkabelklemmenachsen nicht zusammenfallen. Ebenfalls ist in anderen Ausführungsformen vorgesehen, dass mindestens ein Dreharm und eine Endkabelklemme an demselben Endrahmen mittels verschiedener Halterungen angeordnet sind.

Der zweite Dreharm 64 weist der Mittelkabelklemme 36 zugewandt eine zweite Zwischenhalterung 60 auf. Diese weist eine um eine zweite Zwischenhalterungsdrehachse 62 drehbare Querstange 66 mit einer Zwischenkabelklemme 37 auf. Das in Fig. 2 dargestellte Kabelführungssystem 10 weist folglich fünf Fixierungen für die geführten Kabel 11 entlang ihres Verlaufs auf, und zwar zwei Endkabelklemmen 32, 34, zwei Zwischenkabelklemmen 37 sowie eine Mittelkabelklemme 36.

Die erste Endkabelklemme 32 und die zweite Endkabelklemme 34 sind gegenüber der zentralen Längsachse 14 des Gelenkfahrzeugs 12 horizontal beabstandet, wobei in diesem Beispiel beide Endkabelklemmen 32, 34 den gleichen horizontalen Abstand von der Längsachse 14 des Gelenkfahrzeugs 12 aufweisen. Die Endkabelklemmen 32, 34 sind in zueinander gleicher Richtung von der Längsachse 14 horizontal beabstandet angeordnet. Es ergibt sich ein C-förmiger Kabelverlauf.

Bei einer Rechtskurve des Gelenkfahrzeugs 12 werden die Endkabelklemmen 32, 34 durch die Bewegung des Fahrzeuggelenks aufeinander zu bewegt. Die Mittelkabelklemme 36 wird durch die überschüssigen Kabellängen der geführten Kabel 11 auf die linke Seite (bei Draufsicht gemäß Fig. 2) verschoben. Bei einer Linkskurve des Gelenkfahrzeugs 12 hingegen wird der Abstand zwischen den Endkabelklemmen 32, 34 vergrößert. Da die Kabellängen zwischen den Kabelklemmen 32, 34, 36, 37 fixiert sind, bewegt sich zum Ausgleich die Mittelkabelklemme 36 näher an die Längsachse 14 des Gelenkfahrzeugs 12 oder gar über diese hinaus auf die rechte Seite. In einer Ausführungsform ist die Mittelkabelklemme 36 stets auf der den Endkabelklemmen 32, 34 entgegengesetzten Fahrzeughälfte angeordnet. Im dargestellten Beispiel ist die Mittelkabelklemme 36 in der linken Fahrzeughälfte und die Endkabelklemmen 32, 34 in der rechten Fahrzeughälfte angeordnet. Gerade bei schienengebundenen Fahrzeugen wie Trams oder Straßenbahnen kehren sich diese Verhältnisse bei Umkehrung der Fahrtrichtung um.

In Fig. 3 ist eine schematische Seitenansicht einer an einem Mittelrahmen 26 zwangsgeführten Mittelkabelklemme 36 dargestellt. An einer Schlittenschiene 86 des Mittelrahmens 26 wird die Mittelkabelklemme 36 mittels einer Halterung 31 angeordnet und mittels zweier Räder 82 entlanggeführt. Hierdurch ist die Mittelkabelklemme 36 in einer horizontalen Querrichtung zur Längsachse des Gelenkfahrzeugs 12 und entlang des Mittelrahmens 26 verschiebbar. Dies ist durch den Doppelpfeil illustriert. Die Räder 82 sind in einem Ausführungsbeispiel aus Kunststoff hergestellt. Der Mittelrahmen 26 weist insbesondere eine runde Stange zur Zwangsführung der Mittelkabelklemme 36 auf. Insbesondere sind zum Mittelrahmen 26 funktionskomplementäre Rollen an der Mittelkabelklemme 36 vorgesehen, wobei bevorzugterweise die Rollen jeweils eine konkave Lauffläche aufweisen, d.h. dass der Durchmesser der Rolle an den äußeren Rändern der Lauffläche größer ist als in der Mitte der Lauffläche. Auf diese Weise ist ein Pendeln der Mittelkabelklemme 36 an der runden stange des Mittelrahmens 26 ermöglicht.

Die Mittelkabelklemme 36 weist eine Mittelachse 84 auf, wobei die Mittelkabelklemme 36 in diesem Ausführungsbeispiel zu einer durch die Mittelachse 84 verlaufenden Ebene spiegelsymmetrisch ist. Die Mittelkabelklemme 36 weist eine Mehrzahl von Kabelöffnungen 38 auf, wobei in der Mitte der Mittelkabelklemme 36 drei Kabelöffnungen 38 für Kabel größeren Durchmessers vorgesehen sind und an den Seiten jeweils vier Kabelöffnungen 38 für Kabel kleineren Durchmessers angeordnet sind. Eine solche Spiegelsymmetrie ist nicht unbedingt erforderlich, allerdings entlastet es die Mittelkabelklemme 36, wenn die dicksten und steifsten Kabel in Kabelöffnungen 38 in der Mittelachse 84 untergebracht werden.

Die Mittelkabelklemme 36 ist in einem Ausführungsbeispiel aus Gummi hergestellt. Insbesondere sind die Kabelöffnungen 38 mit geringfügig kleinerem Durchmesser als die dafür vorbestimmten Kabel ausgebildet, sodass die Mittelkabelklemme 36 die Kabel fixiert. In einem anderen Ausführungsbeispiel weist die Mittelkabelklemme 36 gegossene, zusammengeschraubte Hartplastikteile auf.

Fig. 4 zeigt eine schematische, abschnittsweise Seitenansicht des ersten Ausführungsbeispiels eines Kabelführungssystems 10. Der Abschnitt umfasst die zweite Endkabelklemme 34 sowie einen zweiten Dreharm 64 und eine zweite Zwischenhalterung 60. Die Position des Faltenbalgs 27 ist rein schematisch und deutet den Bereich des Übergangs 20 an.

Die zweite Endkabelklemme 34 ist mittels einer Halterung 31 am zweiten Endrahmen 24 befestigt. Mittels zweier Lager 88 ist die Endkabelklemme 34 um die zweite Endkabelklemmendrehachse 35 drehbar. Die zweite Endkabelklemme 34 weist eine Mehrzahl von Kabelöffnungen 38 auf, wobei entlang der Mittelachse der Endkabelklemme 34 Kabelöffnungen 38 eines größeren Durchmessers als an den äußeren Rändern der Endkabelklemme 34 vorgesehen sind. Beispielsweise sind Spannungsversorgungskabel für die Fixierung in den mittleren Kabelöffnungen 38 vorgesehen.

An der Halterung 31 ist ferner mittels eines Scharniers 63 drehbar ein zweiter Dreharm 64 angeordnet, welcher um eine vertikale zweite Dreharmdrehachse 65 rotierbar ist.

An der anderen Seite der Längserstreckung des zweiten Dreharms 64 ist eine zweite Zwischenhalterung 60 angeordnet und drehbar um eine zweite Zwischenhalterungsdrehachse mit dem zweiten Dreharm 64 verbunden. Die zweite Zwischenhalterung 60 weist eine Querstange 66 und eine daran befestigte Zwischenkabelklemme 37 auf. Die Zwischenkabelklemme 37 umfasst in diesem Ausführungsbeispiel mehrere Einzelkabelklemmen 39. Jede Einzelkabelklemme 39 ist horizontal entlang der Querstange 66 verschiebbar und um eine Längsachse der Querstange 66 rotierbar. Entsprechende Bewegungen sind mit zwei Pfeilen an der Zwischenhalterung 60 in Fig. 4 eingezeichnet.

In diesem Ausführungsbeispiel ist die Querstange 66 um die Querstangendrehachse 67 drehbar, wobei die Querstangendrehachse 67 vertikal verläuft und mit der zweiten Zwischenhalterungsdrehachse 62 zusammenfällt.

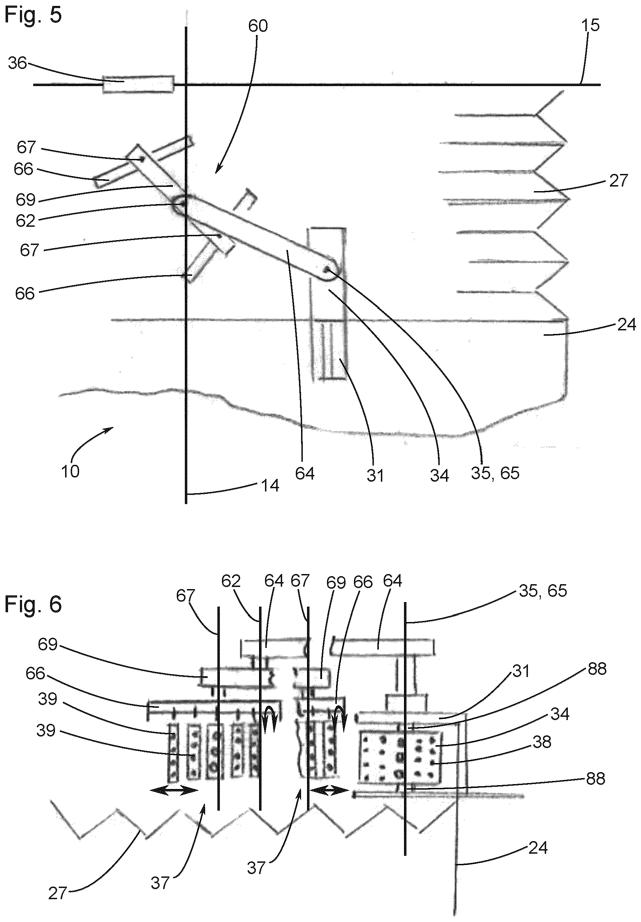

In Fig. 5 ist eine schematische, abschnittsweise Draufsicht eines zweiten Ausführungsbeispiels eines Kabelführungssystems 10 dargestellt. Hierbei ist nur ein Teil des Kabelführungssystems zwischen dem zweiten Endrahmen 24 und dem Mittelrahmen 26 dargestellt, während der in Fig. 2 dargestellte obere Teil zwischen erstem Endrahmen 22 und Mittelrahmen 26 in der Zeichnung fehlt. Dieser kann, wie in Fig. 2, spiegelbildlich oberhalb des Mittelrahmens 26 mitgedacht werden.

Die Längsachse 14 des Gelenkfahrzeugs 12 verläuft vertikal in der Zeichenebene, während die Mittelkabelklemme 36 entlang einer senkrecht dazu verlaufenden Querachse 15 entlang des Mittelrahmens 26 zwangsgeführt verschiebbar ist.

Ähnlich wie im in Fig. 2 gezeigten Ausführungsbeispiel ist eine zweite Endkabelklemme 34 mittels einer Halterung 31 am zweiten Endrahmen 24 angeordnet. Ein zweiter Dreharm 64 ist mittels eines Scharniers 63 um eine zweite Dreharmdrehachse 65 rotierbar an der Halterung 31 befestigt.

Ferner ist am der Halterung 31 abgewandten Ende des Dreharms 64 eine zweite Zwischenhalterung 60 befestigt. In diesem Ausführungsbeispiel weist die zweite Zwischenhalterung 60 einen Halteholm 69, zwei Querstangen 66 und zwei Zwischenkabelklemmen 37 auf.

Der Halteholm 69 ist um eine zweite Zwischenhalterungsdrehachse 62 rotierbar mit dem zweiten Dreharm 64 verbunden. An den zwei Enden in Längsrichtung des Halteholms 69 ist jeweils eine Querstange 66 rotierbar um jeweils eine Querstangendrehachse 67 angeordnet.

Auf diese Weise werden Kabel 11, welche mittels des in Fig. 5 gezeigten Kabelführungssystem 10 geführt werden, zwischen dem ersten Endrahmen 22 und dem zweiten Endrahmen 24 an insgesamt sieben Haltepunkten fixiert. Dies setzt voraus, dass das Kabelführungssystem 10 auch am ersten Dreharm 44 eine erste Zwischenhalterung 40 ähnlich der in Fig. 5 dargestellten zweiten Zwischenhalterung 60 aufweist.

Die zusätzlichen Aufhängepunkte stabilisieren die Kabelführung. Insbesondere Kabel mit einem hohen Eigengewicht und/oder geringer Steifigkeit können zwischen zwei Aufhängepunkten in vertikaler Richtung durchhängen und unter Umständen beschädigt werden. Durch zusätzliche Aufhängepunkte wird an weiteren Positionen im Raum der Kabelverlauf fixiert.

Im in Fig. 5 gezeigten Ausführungsbeispiel sind die rotierbaren Kabelklemmen 32, 34, 37 und die Zwischenhalterung 60 in einem vorbestimmten Winkelbereich rotierbar. Beispielsweise sind die Endkabelklemmen 32, 34 in einem vorbestimmten Winkelbereich von -20° bis +20° rotierbar, also in einem Winkelbereich, der 40° groß ist. Dabei wird die Neutralposition von den Endkabelklemmen 32, 34 bei 0° angenommen, welche in der Neutralposition parallel zur Längsachse 14 des Gelenkfahrzeugs 12 angeordnet sind. Dies entspricht der eingezeichneten Orientierung der zweiten Endkabelklemme 34 in Fig. 2 und Fig. 4. Zum Beispiel ist für die Rotation der Zwischenhalterung 60 ein anderer vorbestimmter Winkelbereich, und zwar von 60° oder kleiner vorgesehen. Das bedeutet, dass anstelle einer vollständigen Umdrehung von 360° sich die Zwischenhalterung 60 um die Zwischenhalterungsdrehachse 42, 62 nur in einem 60°-großen Winkelbereich drehen kann. Durch die Kombination von Drehungen unterschiedlicher Komponenten des Kabelführungssystems, wie Dreharm 64 und Zwischenhalterung 60, ist trotz einer Einschränkung der Winkelbereiche ausreichend Flexibilität für eine kabelschonende Kabelführung gegeben.

Fig. 6 zeigt eine schematische, abschnittsweise Seitenansicht des in Fig. 5 dargestellten zweiten Ausführungsbeispiels eines Kabelführungssystems 10.

Rechts in der Figur dargestellt ist, ähnlich wie in Fig. 4, eine zweite Endkabelklemme 34, welche mittels Lagern 88 rotierbar um eine zweite Endkabelklemmendrehachse 35 ist und mittels einer Halterung 31 am zweiten Endrahmen 24 angeordnet ist.

Der zweite Dreharm 64 ist mittels eines Scharniers 63 an der Halterung 31 befestigt und ist um eine zweite Dreharmdrehachse 65 rotierbar. Wie bereits in Fig. 5 beschrieben, ist am der Dreharmdrehachse 65 abgewandten Ende des zweiten Dreharms 64 eine zweite Zwischenhalterung 60 angeordnet. Die zweite Zwischenhalterung 60 weist einen Halteholm 69 und daran rotierbar befestigte Querstangen 66 auf. Jede der zwei Querstangen 66 weist eine Zwischenkabelklemme 37 auf, wobei beide Zwischenkabelklemmen 37 mehrere Einzelkabelklemmen 39 mit jeweils mehreren Kabelöffnungen 38 aufweisen.

Ähnlich wie bei der einzelnen Querstange 66, welche in Fig. 4 gezeigt ist, sind auch die Einzelkabelklemmen 39 in Fig. 6 jeweils entlang der jeweiligen Querstange 66 horizontal verschiebbar und um eine Längsachse der jeweiligen Querstange 66 rotierbar. Dies ist mit den insgesamt vier Pfeilen dargestellt.

Sowohl der zweite Dreharm 64 als auch der Halteholm 69 und eine der beiden Querstangen 66 und die zugehörige Zwischenkabelklemme 37 sind mit gewellten Linien als nur abschnittsweise dargestellt gekennzeichnet.

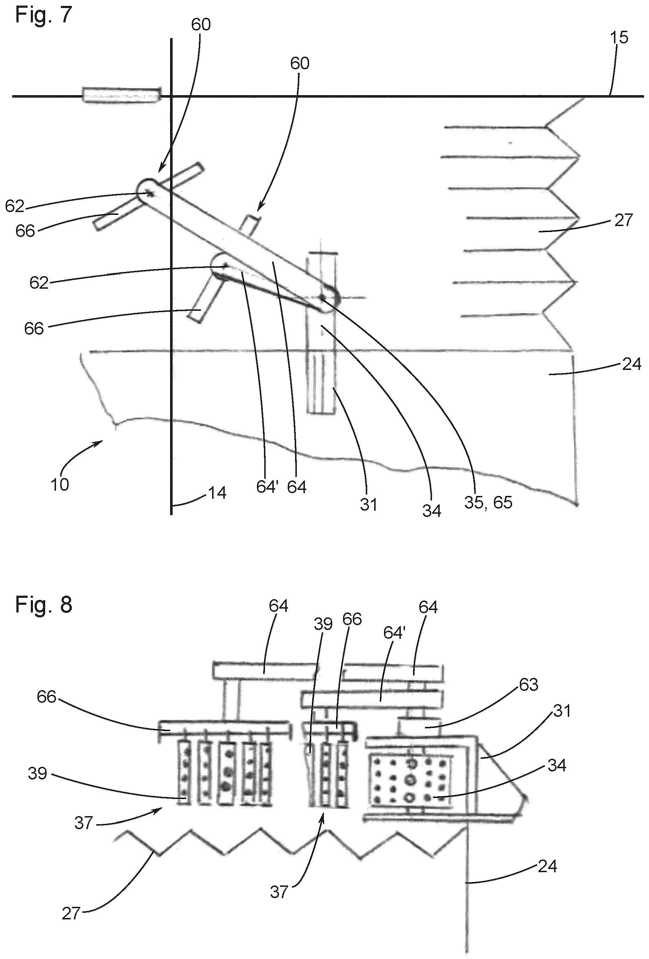

Schließlich ist in Fig. 7 eine schematische, abschnittsweise Draufsicht eines dritten Ausführungsbeispiels eines Kabelführungssystems 10 dargestellt. Wie in Fig. 5 ist nur der Abschnitt des Kabelführungssystems zwischen Mittelrahmen 26 und zweitem Endrahmen 24 abgebildet.

In diesem Ausführungsbeispiel sind zwei erste Dreharme 44, 44` und zwei zweite Dreharme 64, 64' vorgesehen. An jedem der ersten und zweiten Dreharme 44, 44`, 64, 64` ist als Zwischenhalterung 40, 60 jeweils eine Querstange 66 mit einer Zwischenkabelklemme 37 vorgesehen. Vereinfacht gesprochen wird zu dem in Fig. 2 dargestellten ersten Ausführungsbeispiel ein weiterer erster Dreharm 44` und ein weiterer zweiter Dreharm 64` anderer Länge ergänzt.

Entsprechend sind an der Halterung 31 eine zweite Endkabelklemme 34 sowie zwei Scharniere für zwei zweite Dreharme 64, 64` angeordnet. Die zweite Endkabelklemme 34 ist um die zweite Endkabelklemmendrehachse 35 drehbar und beide zweite Dreharme 64, 64' sind um eine gemeinsame zweite Dreharmdrehachse 65 rotierbar, welche mit der zweiten Endkabelklemmendrehachse 35 übereinstimmt. In einem anderen, nicht dargestellten Ausführungsbeispiel sind die beiden zweiten Dreharme 64, 64' mittels unterschiedlicher Halterungen 31 am zweiten Endrahmen 24 angeordnet und/oder sind um unterschiedliche zweite Dreharmdrehachsen 65 rotierbar.

Die zweiten Dreharme 64, 64' weisen unterschiedliche Längen auf. In diesem Ausführungsbeispiel weisen jeweils ein erster Dreharm 44, 44` und ein zweiter Dreharm 64, 64' jeweils die gleiche Länge auf, sind also als ein längerer und ein kürzerer Dreharm ausgebildet. Die ersten Dreharme 44, 44' sind in Fig. 7 nicht dargestellt.

Im Gegensatz zum zweiten Ausführungsbeispiel aus Fig. 5 sind die beiden zweiten Zwischenkabelklemmen 37 in Fig. 7 separat jeweils mit der Halterung 31 verbunden. Dies ist beispielsweise im Fall von einer hohen Last für das Kabelführungssystem 10 durch viele oder schwere Kabel zur Stabilität des Kabelführungssystem 10 hilfreich.

Fig. 8 zeigt eine schematische, abschnittsweise Seitenansicht des in Fig. 7 dargestellten dritten Ausführungsbeispiels eines Kabelführungssystems 10. Ähnlich wie in Fig. 6 ist ein zweiter Dreharm 64 und die zweite Zwischenhalterung 60, einschließlich Querstange 66 und Zwischenkabelklemme 37, mit gewellten Linien dargestellt und nur teilweise abgebildet.

In Fig. 8 ist dargestellt, dass die zwei zweiten Dreharme 64, 64' übereinander mittels eines Scharniers 63 drehbar am zweiten Endrahmen 24 angeordnet sind. In einer anderen, nicht dargestellten Ausführungsform sind mindestens zwei Scharniere 63 für zwei zweite Dreharme 64, 64' vorgesehen.

Auch in diesem dritten Ausführungsbeispiel sind die Einzelkabelklemmen 39 der Zwischenkabelklemmen 37 entlang der jeweiligen Querstange 66 horizontal verschiebbar und um eine Längsachse der jeweiligen Querstange 66 rotierbar. In einer weiteren, nicht dargestellten Ausführungsform ist die Zwischenkabelklemme 37 starr an der jeweiligen Querstange 66 befestigt. Durch die Drehbarkeit der Querstange 66 um eine Querstangendrehachse 67 und die möglichen Rotationen der zweiten Dreharme 64, 64' bleiben weiterhin ausreichend viele Freiheitsgrade, um eine stabile Kabelführung und gleichzeitig schonende Behandlung der geführten Kabel 11 sicherzustellen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Kabelführungssystem
- 11: Kabel
- 12: Gelenkfahrzeug
- 14: Längsachse des Gelenkfahrzeugs
- 15: Querachse
- 16: erster Gelenkfahrzeugabschnitt
- 18: zweiter Gelenkfahrzeugabschnitt
- 20: Übergang
- 22: erster Endrahmen
- 24: zweiter Endrahmen
- 26: Mittelrahmen
- 27: Faltenbalg
- 31: Halterung
- 32: erste Endkabelklemme
- 33: erste Endkabelklemmendrehachse
- 34: zweite Endkabelklemme
- 35: zweite Endkabelklemmendrehachse
- 36: Mittelkabelklemme
- 37: Zwischenkabelklemme
- 38: Kabelöffnung
- 39: Einzelkabelklemme
- 40: erste Zwischenhalterung
- 42: erste Zwischenhalterungsdrehachse
- 43: Scharnier
- 44, 44': erster Dreharm
- 45: erste Dreharmdrehachse
- 46: Querstange
- 47: Querstangendrehachse
- 49: erster Halteholm
- 60: zweite Zwischenhalterung
- 62: zweite Zwischenhalterungsdrehachse
- 63: Scharnier
- 64, 64': zweiter Dreharm
- 65: zweite Dreharmdrehachse
- 66: Querstange
- 67: Querstangendrehachse
- 69: zweiter Halteholm
- 82: Rad
- 84: Mittelachse
- 86: Schlittenschiene
- 88: Endkabelklemmenlager

## Patentansprüche

1. Kabelführungssystem (10) für ein Fahrzeuggelenk eines Gelenkfahrzeugs (12) mit einem ersten Gelenkfahrzeugabschnitt (16) und einem zweiten Gelenkfahrzeugabschnitt (18), die über ein Fahrzeuggelenk gelenkig miteinander verbunden sind, wobei der erste Gelenkfahrzeugabschnitt (16) zum Fahrzeuggelenk hin einen ersten Endrahmen (22) und der zweite Gelenkfahrzeugabschnitt (18) zum Fahrzeuggelenk hin einen zweiten Endrahmen (24) aufweist, wobei zwischen dem ersten Endrahmen (22) und dem zweiten Endrahmen (24) ein Mittelrahmen (26) angeordnet ist,
umfassend eine am ersten Endrahmen (22) anordbare oder angeordnete erste Endkabelklemme (32), eine am zweiten Endrahmen (24) anordbare oder angeordnete zweite Endkabelklemme (34) und eine am Mittelrahmen (26) anordbare oder angeordnete Mittelkabelklemme (36) zum Fixieren von Kabeln (11),
wobei eine Halterung der Mittelkabelklemme (36) am Mittelrahmen (26) eine zwangsgeführte Verschiebung der Mittelkabelklemme (36) in horizontaler Richtung quer zur Längsachse (14) des Gelenkfahrzeugs (12) erlaubt,
**dadurch gekennzeichnet, dass**
zwischen der Mittelkabelklemme (36) und der ersten Endkabelklemme (32) einerseits und zwischen der Mittelkabelklemme (36) und der zweiten Endkabelklemme (349 andererseits jeweils wenigstens eine erste Zwischenhalterung (40) bzw. zweite Zwischenhalterung (60) vorhanden ist, wobei jede der ersten und zweiten Zwischenhalterungen (40, 60) zum einen um eine durch die jeweilige erste bzw. zweite Zwischenhalterung (40, 60) verlaufende vertikale Zwischenhalterungsdrehachse (42, 62) drehbar ist und zum anderen jeweils über wenigstens einen Dreharm (44, 64) an einem Scharnier (43, 63) mit vertikaler Drehachse (45, 65) am ersten Endrahmen (22) einerseits bzw. am zweiten Endrahmen (24) andererseits angelenkt angeschlagen ist,
wobei die erste Endkabelklemme (32), die zweite Endkabelklemme (34), die Mittelkabelklemme (36) und die ersten und zweiten Zwischenhalterungen (40, 60) eine Mehrzahl von Kabelöffnungen (38) aufweisen und ausgebildet sind, durch die Kabelöffnungen (38) hindurchgeführte Kabel (11) zu fixieren.

2. Kabelführungssystem (10) nach Anspruch 1, **dadurch gekennzeichnet, dass** Halterungen (31) der ersten und zweiten Endkabelklemmen (32, 34) an den Endrahmen (22, 24) jeweils eine Drehung der ersten bzw. zweiten Endkabelklemme (32, 34) um jeweils eine vertikale Endkabelklemmendrehachse (33, 35) erlauben.

3. Kabelführungssystem (10) nach Anspruch 1 oder 2, **dadurch gekennzeichnet, dass** jede der ersten und zweiten Zwischenhalterungen (40, 60) eine Querstange (46, 66) und mindestens eine an der Querstange (46, 66) befestigte Zwischenkabelklemme (37) aufweist, wobei die Querstange (46, 66) mit der Zwischenkabelklemme (37) um die jeweilige Zwischenhalterungsdrehachse (42, 62) rotierbar ist, wobei insbesondere die mindestens eine Zwischenkabelklemme (37) entlang der Querstange (46, 66) horizontal verschiebbar ist und/oder um eine Längsachse der Querstange (46, 66) rotierbar ist.

4. Kabelführungssystem (10) nach Anspruch 3, **dadurch gekennzeichnet, dass** mindestens eine Zwischenkabelklemme (37) mehrere Einzelkabelklemmen (39) umfasst, wobei insbesondere jede Einzelkabelklemme (39) entlang der Querstange (46, 66) horizontal verschiebbar ist und/oder um eine Längsachse der Querstange (46, 66) rotierbar ist.

5. Kabelführungssystem (10) nach einem der Ansprüche 1 bis 4, **dadurch gekennzeichnet, dass** die erste Endkabelklemme (32) und die zweite Endkabelklemme (34) gegenüber der Längsachse (14) des Gelenkfahrzeugs (12), insbesondere in zueinander gleicher Richtung, horizontal beabstandet anordbar oder angeordnet sind, wobei insbesondere die erste Endkabelklemme (32) und die zweite Endkabelklemme (34) jeweils einen gleichen oder unterschiedlichen horizontalen Abstand zur Längsachse (14) des Gelenkfahrzeugs (12) aufweisen.

6. Kabelführungssystem (10) nach einem der Ansprüche 1 bis 5, **dadurch gekennzeichnet, dass** das Kabelführungssystem (10) spiegelsymmetrisch zu einer vom Mittelrahmen (26) aufgespannten Ebene aufgebaut ist.

7. Kabelführungssystem (10) nach einem der Ansprüche 1 bis 6, **dadurch gekennzeichnet, dass** das Kabelführungssystem (10) mindestens drei, insbesondere vier, Dreharme (44, 44`, 64, 64`) aufweist, wobei zwei erste Dreharme (44, 44`) am ersten Endrahmen (22) und ein zweiter, insbesondere zwei zweite, Dreharme (64, 64`) am zweiten Endrahmen (24) angeordnet oder anordbar sind und/oder wobei zwei erste Dreharme (44, 44`) um eine erste Dreharmdrehachse (45) und ein zweiter Dreharm (64, 64`), insbesondere zwei zweite Dreharme (64, 64`), um eine zweite Dreharmdrehachse (65) rotierbar sind.

8. Kabelführungssystem (10) nach dem Anspruch 7, **dadurch gekennzeichnet, dass** mindestens ein Dreharm (44, 44`, 64, 64`) eine andere Länge als ein anderer Dreharm (44, 44`, 64, 64`) aufweist, wobei insbesondere mindestens ein Paar von Dreharmen (44, 44`, 64, 64`) jeweils die gleiche Länge aufweist.

9. Kabelführungssystem (10) nach einem der Ansprüche 1 bis 8, **dadurch gekennzeichnet, dass** jede der ersten und zweiten Zwischenhalterungen (40, 60) zwei Querstangen (46, 66) mit jeweils mindestens einer an der jeweiligen Querstange (46, 66) befestigten Zwischenkabelklemme (37) aufweist,
wobei die zwei Querstangen (46, 66) jeweils an einem Halteholm (49, 69) um eine vertikale Querstangendrehachse (47, 67) rotierbar befestigt sind und der Halteholm (49, 69) um die Zwischenhalterungsdrehachse (42, 62) rotierbar am Dreharm (44, 44`, 64, 64`) befestigt ist.

10. Kabelführungssystem (10) nach einem der Ansprüche 1 bis 9, **dadurch gekennzeichnet, dass** das Kabelführungssystem (10) eingerichtet und ausgebildet ist, Kabel (11) in einem C-förmigen Kabelverlauf zu führen, und/oder dass mindestens eine Endkabelklemme (32, 34) in einer Neutralposition parallel zur Längsachse (14) des Gelenkfahrzeugs (12) angeordnet ist.

11. Kabelführungssystem (10) nach einem der Ansprüche 1 bis 10, **dadurch gekennzeichnet, dass** mindestens eine Endkabelklemme (32, 34) und/oder mindestens eine Zwischenhalterung (40, 60) und/oder mindestens eine Zwischenkabelklemme (37) in einem vorbestimmten Winkelbereich rotierbar sind, wobei insbesondere der Winkelbereich 90° oder kleiner, insbesondere 60° oder kleiner, insbesondere 50° oder kleiner, insbesondere 30° oder kleiner, insbesondere 20° oder kleiner, ist.

12. Kabelführungssystem (10) nach einem der Ansprüche 1 bis 11, **dadurch gekennzeichnet, dass** mindestens ein Dreharm (44, 44`, 64, 64`) als Teleskopdreharm mit veränderlicher Länge ausgebildet ist, wobei insbesondere der Teleskopdreharm mindestens zwei rohrförmige Teleskopsegmente unterschiedlichen Außendurchmessers aufweist.

13. Kabelführungssystem (10) nach einem der Ansprüche 1 bis 12, **dadurch gekennzeichnet, dass** die erste und zweite Endkabelklemme (32, 34) und die Mittelkabelklemme (36) Kabelöffnungen (38) unterschiedlichen Durchmessers aufweisen, wobei insbesondere in horizontaler Richtung mittig angeordnete Kabelöffnungen (38) einen größeren Durchmesser aufweisen als Kabelöffnungen (38) jenseits der horizontalen Mitte der jeweiligen Kabelklemme (32, 34, 36).

14. Kabelführungssystem (10) nach einem der Ansprüche 1 bis 13, **dadurch gekennzeichnet, dass** das Kabelführungssystem (10) einen Mittelrahmen (26) aufweist und die Mittelkabelklemme (36) am Mittelrahmen (26) anordbar oder angeordnet ist.

15. Gelenkfahrzeug (12) mit einem Kabelführungssystem (10) nach einem der Ansprüche 1 bis 14.
